Europäisches Patentamt

European Patent Office

Office européen des brevets

(19)

(11) Veröffentlichungsnummer: **0 185 846**
**B1**

(12) **EUROPÄISCHE PATENTSCHRIFT**

(45) Veröffentlichungstag der Patentschrift: **11.04.90**

(51) Int. Cl.⁵: **F 02 C 5/00**

(21) Anmeldenummer: **85110475.2**

(22) Anmeldetag: **20.08.85**

(54) Gasturbine mit intermittierender Verbrennung.

(30) Priorität: **20.08.84 DE 3430613**

(43) Veröffentlichungstag der Anmeldung:
**02.07.86 Patentblatt 86/27**

(45) Bekanntmachung des Hinweises auf die
Patenterteilung:
**11.04.90 Patentblatt 90/15**

(84) Benannte Vertragsstaaten:
**DE FR GB IT**

(56) Entgegenhaltungen:
**AT-B- 140 446
DE-A-1 932 119
FR-A- 713 330
FR-A- 998 596
GB-A- 467 630
US-A-1 584 346
US-A-1 654 119**

(73) Patentinhaber: **Kielhorn, Gerhard
Sommerhalde 33
D-7900 Ulm-Ermingen (DE)**

(72) Erfinder: **Kielhorn, Gerhard
Sommerhalde 33
D-7900 Ulm-Ermingen (DE)**

(74) Vertreter: **Weickmann, Heinrich, Dipl.-Ing. et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

**Beschreibung**

Die Erfindung betrifft eine Brennkraftmaschine und insbesondere eine Brennkraftmaschine mit einem Stator und einem an dem Stator drehbar gelagerten Rotor.

Eine solche Brennkraftmaschine ist aus dem US—Patent 1 654 119 bekannt. Der Stator enthält mehrere stationäre Brennkammern, von denen jede eine zum Rotor hin gerichtete Ausströmöffnung aufweist. Der Rotor trägt über seinen Umfang verteilt eine Vielzahl Arbeitsflächen in Form von Turbinenschaufeln. Durch Drehschieberventile gesteuert wird den Brennkammern intermittierend Kraftstoff-Luft-Gemisch zugeführt und gezündet. Zur Erhöhung der Ausströmgeschwindigkeit der guzündeten Brenngase verengen sich die Brennkammern Ausströmöffnung hin. Das Kraftstoff-Lung-Gemisch wird den Brennkammern in Ausströmrichtung der gezündeten Brenngase zugeführt. Die aus der Brennkammern ausströmenden Brenngase werden von den Turbinenschaufeln ungelenkt.

Ähnliche Brennkraftmaschinen sind aus dem österreichischen Patent 140 446 und dem französischen Patent 998 596 bekannt. Bei diesen Brennkraftmaschinen wird das Kraftstoff-Luft-Gemisch vor dem Einbringen in die Brennkammer von einem Verdichter verdichtet. Bei dem Verdichter des französischen Patents 998 596 handelt es sich um einen mit dem Rotor über ein Planetengetriebe gekuppelten Kanalrad-Verdichter.

Es ist Aufgabe der Erfindung, einen Weg zu zeigen, wie der Wirkungsgrad einer Brennkraftmaschine der vorstehend erläuterten Art auf konstruktiv einfache Weise erhöht werden kann.

Die Erfindung geht aus von einer Brennkraftmaschine mit einem Stator und einem an dem Stator drehbar gelagerten Rotor, bei welcher der Stator wenigstens eine stationäre Brennkammer mit einer zum Rotor hin gerichteten Ausströmöffnung aufweist und der Rotor mit wenigstens einer an der Ausströmöffnung vorbeibewegbaren- durch eine Wand der Expansionskammer des Rotors gebildeten Arbeitsfläche versehen ist, die die aus der Brennkammer ausströmenden Brenngase umlenkt. Die Brennkraftmaschine umfaßt ferner eine die Brennkammer intermittierend mit Brenngas ladenden und die Ladung zündenden Lade- und Zündeinrichtung.

Die erfindungsgemäße Verbesserung besteht darin, daß der Verdichter das verdichtete Brenngas im wesentlichen engegengesetzt zur Ausströmrichtung des gezündeten Brenngase in die Brennkammer lädt und daß die Arbeitsfläche so ausgebildet ist, daß die aus der Brennkammer ausströmenden Brenngase im wesentlichen in dazu entgegengesetzte Richtung umgelenkt werden. Die Brennkammer ist entgegengesetzte zur Ausströmrichtung geschlosen, womit das von Verdichter entgegengesetzt zur Ausströmrichtung zugeführte Frischgas in der Brennkammer zusätzlich verdichtet wird.

Bei der Zündung entsteht ein Druckimpuls, der durch die Ausströmöffnung der Brennkammer hindurch unmittelbar auf die Arbeitsfläche der mit dem Rotor umlaufenden Expansionskammer trifft. In der Expansionskammer expandiert das Brenngas vorzugsweise bis auf den Umgebungsdruck ihrer Auslaßöffnung, d.h. auf Atmosphärendruck. Das abgearbeitete Brenngas tritt mit verhältnismäßig geringer Geschwindigkeit aus dem Arbeitsbereich des Rotors. Die Geschwindigkeit, mit der das Brenngas in die Brennkammern geladen wird und die anschließende Verbrennung sind hingegen vergleichsweise sehr schnell. Vorzugsweise betragen diese Geschwindigkeiten mehr also 300 m/sec.

Unter Brenngasen solien im vorstehenden wie auch im folgenden allgemein Arbeitsmedien verstanden werden. Die Erfindung ist unabhängig davon, ob der Verdichter die Brennkammer mit Kraftstoff-Luft-Gemisch lädt oder lediglich komprimierte Luft zuführt, in die beispielsweise in der Brennkammer Kraftstoff eingespritzt wird. Die Lade- und Zündeinrichtung kann so gestaltet sein, daß sie das Brenngas mit einem für die Selbstzündung ausreichenden Druck in die Brennkammer lädt.

In einer bevorzugten Ausführungsform verringert sich die Innenquerschnittsfläche der Brennkammer entgegen der Ausströmrichtung der gezündeten Brenngase im wesentlichen stetig. Diese Maßnahme erhöht den bei der adiabatischen Verdichtung erzielbaren Brenngasdruck und damit den Wirkungsrad. Speziell geeignet sind Brennkammern mit parabolischer Innenmantelfläche, die das vom Verdichter zugeführte Brenngas in Brennpunktnähe konzentrieren. In Brennpunktnähe ist bevorzugt auch eine Zundquelle der Lade- und Zündeinrichtung vorgesehen. Prinzipiell eignen sich aber auch etwa zylinderförmige Brennkammern.

Die Arbeitsfläche der Expansionskammer ist bevorzugt so angeordnet, daß die aus der Ausströmöffnung austretenden Brenngase um nahezu 180° umgelenkt werden, um den Druckimpuls der gezündeten Brenngase optimal nutzen zu können. Die Expansionskammer ist hierbei zweckmäßigerweise so bemessen, daß sie die abgearbeiteten Brenngase in einem einzigen Expansionsschritt pro Zündung im wesentlichen auf den Umgebungsdruck der Auslaßöffnung, d.h. Atmosphärendruck, expandiert. Wirkungsgradverluste durch Leitschaufeln oder dergleichen lassen sich so vermeiden.

Für eine möglichst gute Umsetzung der kinetischen Energie der aus der Brennkammer ausströmenden Brenngase, sollte die Ausströmrichtung senkrecht zur Axiallängsschnittebene des Rotors verlaufen. Um diese Bedingung möglichst gut annähern zu können, ist die Brennkammer bevorgzugt axial seitlich der Bewegungsbahn der Expansionskammer angeordnet und die Ausströmrichtung der Brennkammer verläuft unter einem spitzen Winkel im wesentlichen tangential zur Bewegungsbahn der Expansionskammer Ebenso gibt die Expansionskammer die abgearbeiteten Brenngase mit im wesentlichen tangential zur Bewegungsbahn verlaufender Strömungsrichtung bevorzugt über eine in Umfangsrichtung des Rotors offene Austrittsöffnung ab. An die Austrittsöffnung der Expansionskammer kann sich eine entgegengesetzt zur Drehrichtung des Rotors nach radial außen strebende Spiralmantelfläche anschließen, die aufgrund der Drehung des Rotors die abgearbeiteten Brenngase nach außen abfördern.

In einer bevorzugten Ausführungsform weist der Verdichter ein entgegengesetzt zur Drehrichtung des Rotors rotierendes Flügelrad auf, während die Brennkammern des Stators in einem das Flügelrad umschließenden Gehäusering vorgesehen sind. Das Flügelrad fördert die verdichteten Brenngase über radial Öffnungen in die unmittelbar an den Flügelradumfang anschließenden Brennkammern. Auf diese Weise werden die verdichteten Brenngase mit der Umfangsgeschwindigkeit des Flügelrads unmittelbar in die Brennkammern geladen. Für die Steuerung des intermittierenden Brennkammerbetriebs sind an dem Rotor Drehschieber vorgesehen, die mit diesem zusammen rotieren und die Einlaßöffnungen und Ausströmöffnungen der Brennkammern steuern. Das Flügelrad kann über ein Umkehrgetriebe, beispielsweise ein Planetengetriebe vorzugsweise drehzahlübersetzt unmittelbar angetrieben sein. Zusätzlich zu dem Flügelrad kann der Verdichter zusätzliche Vorverdichter umfassen, um den Eingangsdruck der Brennkammer erhöhen zu können.

Im folgenden soll ein Ausführungsbeispiel der Erfindung anhand von Zeichnungen näher erläutert werden. Es zeigt:

Fig. 1 einen schematischen Axiallängsschnitt durch eine Brennkraftmaschine, gesehen entlang einer Linie I—I in Fig. 2;

Fig. 2 einen Axialquerschnitt durch die Brennkraftmaschine, gesehen entlang einer Linie II—II in Fig. 1;

Fig. 3a bis 3c ein Detail der Fig. 2, dargestellt in verschiedenen Zeitpunkten des Arbeitszyklus der Brennkraftmaschine;

Fig. 4a bis 4c eine Detailansicht der Brennkraftmaschine, gesehen entlang einer Linie IV—IV in Fig. 1 zu verschiedenen Zeitpunkten des Arbeitszyklus der Brennkraftmaschine und

Fig. 5 eine perspektivische Seitenansicht eines Rotors der Brennkraftmaschine.

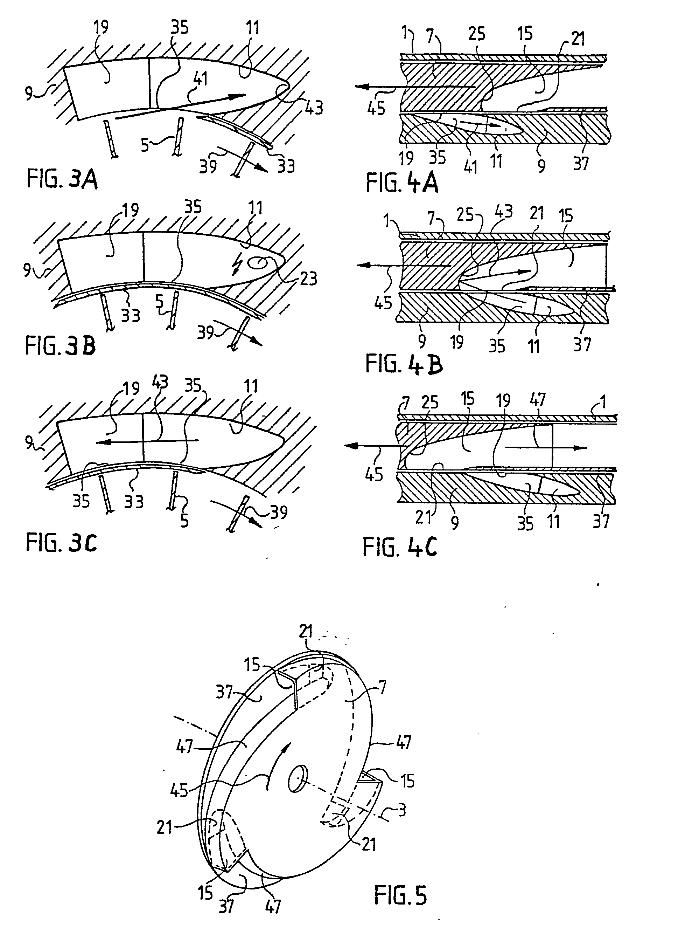

Die Brennkraftmaschine umfaßt ein Gehäuse 1, in welchem axial nebeneinander auf einer gehäusefesten Achse 3 ein Radialverdichter-Flügelrad 5 eines Verdichters und ein Rotor 7 drehbar gelagert sind. In einem das Flügelrad 5 umschließenden Gehäusering 9 sind mehrere, hier fünf Brennkammern 11 angeordnet, die über das Flügelrad 5 des Verdichters von radial innen her mit an einem Verdichtereingang 13 zugeführtem Brenngas geladen werden. Der Rotor 7 umfaßt mehrere Expansionskammern 15, die im wesentlichen auf dem Anordnungskreis 17 der Brennkammern 11 axial seitlich der Brennkammern 11 angeordnet sind. Die Brennkammern 11 haben dem Rotor 7 axial benachbarte Austrittsöffnungen 19, denen Eintrittsöffnungen 21 (Fig. 4 und 5) der Expansionskammern 15 zugeordnet sind. Die mittels einer Zündkerze 23 oder dergleichen von einer nicht näher dargestellten Zündeinrichtung gezündeten Brenngase beaufschlagen Arbeitsflächen 25 in den Expansionskammern und treiben den Rotor 7 an. Der Rotor 7 ist über ein unteresetzendes Planetengetriebe 27 mit einer Abtriebswelle 29 verbunden und treibt über ein übersetzendes Planetengetriebe 31 das Flügelrad 5 mit umgekehrter Drehrichtung, bezogen auf seinen Drehsinn, an.

Zur Steuerung des diskontinuierlichen Betriebs der Brennkammern 11 trägt der Rotor 7 Schiebersegmente 33, die zwischen dem Außenumfang des Flügelrads 5 und radial nach innen offenen Einlaßöffnungen 35 der Brennkammern 11 rotieren und bei Überlappung mit den Einlaßöffnungen 35 die Brennkammern 11 verschließen. Bei den Schiebersegmenten 33 handelt es sich um gleichachsig zur Drehachse des Rotors 7 angeordnete Hohlzylindersegmente, die axial vom Rotor 7 abstehen. Der Rotor 7 trägt ferner axial benachbart dem Gehäusering 9 eine die Ausströmöffnungen 19 der Brennkammern überdeckende Schieberscheibe 37, die die Ausströmöffnungen 19 bis auf den Überlappungsbereich mit den Eintrittsöffnungen 21 der Expansionskammern 15 verschließt. Die radiale Dicke der Schiebersegmente 33 und die axiale Dicke der Schieberscheibe 37 ist möglichst klein gehalten, um Strömungsverluste gering zu halten und nachfolgend erläuterte Strömungsrichtungen einhalten zu können.

Jede der Brennkammern 11 ist, bezogen auf ihre Ausströmrichtung, in einer zur Drehachse des Rotors 7 parallelen Ebene angeordnet und zwar so, daß die Ausströmrichtung in einem spitzen Winkel von beispielsweise 20° oder weniger zu einer achsnormalen Ebene verläuft. Wie Fig. 3a zeigt, fördert das in Richtung eines Pfeils 39 umlaufende Flügelrad 5 die Brenngase im wesentlichen tangential durch die Einlaßöffnung 35 hindurch in Richtung eines Pfeils 41 auf das in Umfangsrichtung des Ausströmöffnung 19 gegenüberliegende geschlossene Ende 43 der Brennkammer 11 zu. Der Innenquerschnitt der Brennkammern 11 verjüngt sich von der Ausströmöffnung 19 zum geschlossenen Ende 43 hin, so daß sich die einströmenden Brenngase im Bereich der Endwand 43 verdichten. Die Innenwandflächen haben zweckmäßigerweise parabolische Form, so daß sich im Bereich des Brennpunkts eine besonders hohe Verdichtung ergibt. Im Bereich des Brennpunkts ist auch die Zündkerze 23 angeordnet, um eine möglichst rasche Freisetzung der Energie des Brenngases zu erreichen.

Fig. 3a zeigt die Brennkammer 11 in einer Ladephase, in der sie bei geöffneter Einlaßöffnung 35 mit Frischgas in Richtung des Pfeils 41 geladen wird. Während der Ladephase ist die Austrittsöffnung 19 geschlossen. Fig. 3b zeigt die Zündphase, bei der das adiabatisch im Brennpunkt verdichtete Brenngas gezündet wird. Die Einlaßöffnung 35 und die Austrittsöffnung 19 sind im wesentlichen geschlossen. Fig. 3c zeigt die Arbeitsphase der Brennkammer 11, bei welcher die gezündeten Brenngase in Form einer Druckwelle im wesentlichen entgegenesetzt der Einströmrichtung 41 in Richtung eines Pfeils 43 durch die Ausströmöffnung 19 austreten. Die Einlaßöffnung 35 ist hierbei verschlossen, während die Ausströmöffnung 19 mit der Einlaßöffnung 21 einer der Expansionskammern 15 axial korrespondiert.

Die Fig. 4a bis c zeigen diesen Sachverhalt in einer anderen Schnittansicht. Fig. 4a zeigt die Ladephase, Fig. 4b die Arbeitsphase, in welcher die aus der Ausströmöffnung 19 austretenden Gase auf die in Richtung eines Pfeils 45 sich bewegende Arbeitsfläche 25 der Expansionskammer 15 tritt. Die Arbeitsfläche 25 ist so geformt, daß die ausströmenden Gase möglichst weitgehend um 180° umgelenkt un vorzugsweise in Umfangsrichtung 47 des Rotors aus der Expansionskammer 15 austreten. Fig. 4c zeigt die Auspuffphase der Expansionskammer 15, in welcher die als impulsförmige Druckwelle in die Expansionskammer 15 eingetretenen Abgase im wesentlichen auf den Umgebungsdruck der Auslaßöffnung der Expansionskammer 15, d.h. Atmosphärendruck, expandiert werden. Die Auspuffphase kann sich mit der Ladephase der Brennkammer 11 überschneiden. Die abgearbeiteten Brenngase treten mit vergleichsweise geringer Strömungsgeschwindigkeit aus den Spiralmantelflächen 47 des Rotors 7 aus und werden über Mantelöffnungen 49 des Gehäuses 1 radial abgeführt.

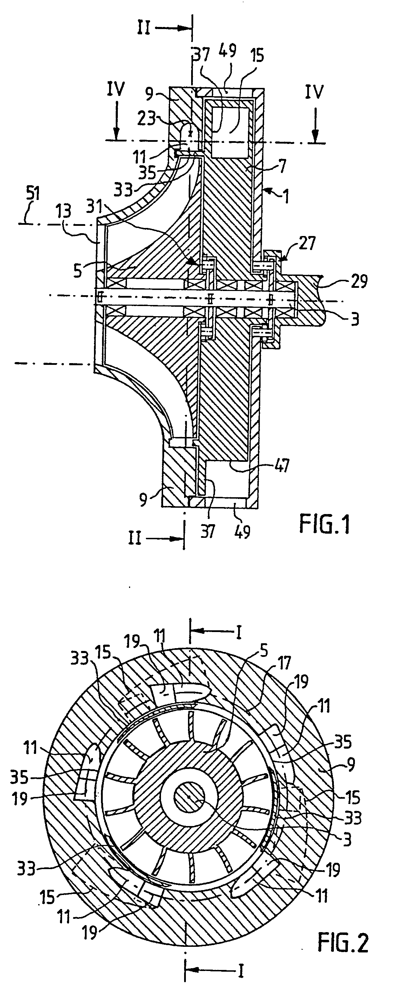

In Fig. 1 ist lediglich das Flügelrad 5 eines Verdichters dargestellt. Der Einlaßöffnungen 13 können zusätzliche Vorverdichterstufen, wie sie bei 51 angedeutet sind, vorgeschaltet sein. Das dargestellte Ausführungsbeispiel umfaßt lediglich einen einzigen Rotor. Die Brennkraftmaschine kann jedoch mit mehreren Rotoren aufgebaut sein, wobei insbesondere paarweise spiegelbildliche Anordnungen bevorzugt sind, um Axialdruckkomponenten der Brennkammern zu kompensieren. Der Verdichter kann Kraftstoff-Luft-Gemisch verdichten und den Brennkammern zuführen; es kann jedoch auch vorgesehen sein, daß der Verdichter lediglich Luft verdichtet, während der Kraftstoff insbesondere in die Brennkammern direkt eingespritzt wird. Dem Brenngas können verbrennungsfördernde, insbesondere die Verbrennungsgeschwindigkeit erhöhende Zusätze zugesetzt sein, ebenso wie die Brennkammerwände mit die Verbrennung bzw. deren Geschwindigkeit fördernden Katalysatormaterialien beschichtet sein können. Die Expansionskammern haben bevorzugt das Profil einer Lavalle-Düse. Die Idee, die Brenngase in einer rotierenden Expansionskammer in einem Schritt bis auf Atmosphärendruck zu expandieren, ist auch bei anderen Brennkammern als der vorstehend erläuterten Brennkammer, insbesondere auch bei kontinuierlich betriebenen Brennkammern, einsetzbar.

## Patentansprüche

1. Brennkraftmaschine mit einem Stator (1) und einem an dem Stator (1) drehbar gelagerten Rotor (7), mit wenigstens einer stationären, eine zum Rotor (7) hin gerichtete Ausströmöffnung (19) aufweisenden Brennkammer (11) an dem Stator (1), mit einer die Brennkammer (11) intermittierend mit Brenngas ladenden unddie Ladung zündenden Lade- und Zündeinrichtung (5, 23, 51), und mit wenigstens einer an der Ausströmöffnung (19) vorbeibewegbaren, durch eine Wand der Expansionskammer (15) des Rotors (7) gebildeten Arbeitsfläche (25), die die aus der Brennkammer (11) ausströmenden Brenngase umlenkt, dadurch gekennzeichnet, daß der Verdichter (5) das verdichtete Brenngas im wesentlichen entgegengesetzt zur Ausströmrichtung (43) der gezündeten Brenngase in die Brennkammer (11) lädt und daß die Arbeitsfläche (25) so ansgebildet ist, daß die aus der Brennkammer (11) ausströmenden Brenngase im wesentlichen in dazu entgegengesetzte Richtung umgelenkt werden.

2. Brennkraftmaschine nach Anspruch 1, dadurch gekennzeichnet, daß die Expansionskammer (15) so bemessen ist, daß sie die Brenngase in einem einzigen Expansionsschritt pro Zündung im wesentlichen auf den Druck der umgebenden Atmosphäre expandiert.

3. Brennkraftmaschine nach Anspruch 1 oder 2, dadurch gekennzeichnet, daß sich die Innenquerschnittsfläche der Brennkammer (11) entgegen der Ausströmrichtung (43) der gezündeten Brenngase im wesentlichen stetig verringert.

4. Brennkraftmaschine nach Anspruch 3, dadurch gekennzeichnet, daß die Brennkammer (11) im wesentlichen parabolische Innenmantelflächen hat.

5. Brennkraftmaschine nach Anspruch 4, dadurch gekennzeichnet, daß die Lade- und Zündeinrichtung (5, 23, 51) eine im Bereich des Brennpunkts der parabolischen Innenmantelfläche angeordnete Zündquelle (23) aufweist.

6. Brennkraftmaschine nach einem Ansprüche 1 bis 5, dadurch gekennzeichnet, daß die Arbeitsfläche (25) des Rotors (7) die aus der Ausströmöffnung (19) austretenden, gezündeten Brenngase im wesentlichen um 180° umlenkt.

7. Brennkraftmaschine nach einem der Ansprüche 1 bis 6, dadurch gekennzeichnet, daß die Brennkammer (11) axial seitlich der Bewegungsbahn der Expansionskammer (15) angeordnet ist, daß die Ausströmrichtung (43) der Brennkammer (11) unter einem spitzen Winkel, zur Bewegungsbahn der Expansionskammer im wesentlichen in einer Ebene parallel zur Drehachse des Rotors (7) verläuft und daß die Expansionskammer (15) die Brenngase mit im wesentlichen tangential zur Bewegungsbahn verlaufender Strömungsrichtung expandiert.

8. Brennkraftmaschine nach Anspruch 7, dadurch gekennzeichnet, daß der Verdichter (5, 51) die Brennkammer unter einem spitzen Winkel zur Ausströmrichtung (43) von der der Rotordrehachse zugewandten Seite her lädt.

9. Brennkraftmaschine nach Anspruch 7 oder 8, dadurch gekennzeichnet, daß die Expansionskammer (15) eine in Umfangsrichtung des Rotors (7) offene Austrittsöffnung aufweist, an deren radial innerem Randbereich eine entgegengesetzt zur Drehrichtung des Rotors (7) nach radial außen strebende Spiralmantelfläche (47) anschließt.

10. Brennkraftmaschine nach einem der Ansprüche 1 bis 9, dadurch gekennzeichnet, daß der Verdichter (5, 51) ein mit zur Drehrichtung (45) des Rotors (7) entgegengesetzter Drehrichtung (39) angetriebenes Flügelrad (5), insbesondere in Form eines Radialverdichters, aufweist, welches das verdichtete Brenngas in Umfangsrichtung beschleunigt und mit radialer und tangentialer Strömungsrichtungskomponente abgibt, daß der Stator (1) einen mehrere Brennkammern (11) enthaltenden Gehäusering (9) aufweist, der das Flügelrad (5) umschließt und radial in die Brennkammern (11) führende Einlaßöffnungen (35) und axial aus den Brennkammern (11) herausführende Ausströmöffnungen (19) aufweist und daß der Rotor (7) Drehschieber (33, 37) trägt, die die Einlaßöffnungen (35) und Ausströmöffnungen (19) der Brennkammern (11) steuern.

11. Brennkraftmaschine nach Anspruch 10, dadurch gekennzeichnet, daß das Flügelrad (5) über ein Drehrichtungsumkehrgetriebe, insbesondere ein Planetengetriebe, (31) mit dem Rotor (7) gekuppelt ist.

12. Brennkraftmaschine nach Anspruch 10 oder 11, dadurch gekennzeichnet, daß der Verdichter (5, 51) zusätzliche Vorverdichter (51) aufweist.

## Revendications

1. Moteur à combustion interne avec un stator (1) et un rotor (7) monté rotatif sur le stator (1), avec au moins une chambre de combustion (11) stationnaire dans le stator (1), laquelle présente une ouverture de flux sortant (19) orientée vers le rotor (7), avec un dispositif d'alimentation et d'allumage (5, 23, 51) qui, d'une manière intermittente, charge la chambre de combustion (11) en gaz de combustion, et allume la charge, et avec au moins une surface de travail (25), déviant les gaz de combustion sortant de la chambre de combustion (11), qui est formée par une paroi de la chambre de détente (15) du rotor (7), et qui peut être déplacée davant l'ouverture de flux sortant (19), caractérisé en ce que le compresseur (5) charge dans la chambre de combustion (11) le gaz de combustion comprimé sensiblement à l'opposé du sens de flux sortant (43) des gaz de combustion allumés, et en ce que la face de travail (25) est conformée de telle sorte que les gaz de combustion qui sortent de la chambre de combustion (11), sont déviés dans la direction sensiblement opposée.

2. Moteur à combustion interne selon la revendication 1, caractérisé en ce que la chambre de détente (15) est dimensionnée de telle sorte qu'en une seule phase de détente par allumage, elle détend le gaz de combustion sensiblement à la pression de l'atmosphér ambiante.

3. Moteur à combustion interne selon la revendication 1 ou 2, caractérisé en ce que la superficie de section intérieure de la chambre de combustion (11) diminue de façon sensiblement constante à l'encontre de la direction de flux sortant (43) des gaz de combustion allumés.

4. Moteur à combustion interne selon la revendication 3, caractérisé en ce que la chambre de combustion (11) possède des faces d'enveloppe intérieure sensiblement paraboliques.

5. Moteur à combustion interne selon la revendication 4, caractérisé en ce que le dispositif d'alimentation et d'allumage (5, 23, 51) présente une source d'allumage (23) disposée dans la région du foyer des faces d'enveloppe intérieure paraboliques.

6. Moteur à combustion interne selon l'une des revendications 1 à 5, caractérisé en ce que la face de travail (25) du rotor (7) dévie sensiblement à 180° les gaz de combustion allumés qui sortent de l'ouverture de flux sortant (19).

7. Moteur à combustion interne selon l'une des revendications 1 à 6, caractérisé en ce que la chambre de combustion (11) est disposée axialement à côté du parcours de déplacement de la chambre de détente (15), en ce que la direction de flux sortant (43) de la chambre de combustion (11) s'étend sous un angle aigu par rapport au parcours de déplacement de la chambre de détente, sensiblement dans un plan parallèle à l'axe de rotation du rotor (7), et en ce que la chambre de détente (15) détend les gaz de combustion avec une direction d'écoulement s'étendant sensiblement tangentiellement par rapport au parcours de déplacement.

8. Moteur à combustion interne selon la revendication 7, caractérisé en ce que le compresseur (5, 51) charge la chambre de combustion par le côté tourné vers l'axe de rotation du rotor, sous un angle aigu par rapport à la direction de flux sortant (43).

9. Moteur à combustion interne selon la revendication 7 ou 8, caractérisé en ce que la chambre de détente (15) présente une ouverture de sortie ouverte dans le sens péripherique du rotor (7), à la région de bord radialement intérieure de laquelle se raccorde une face d'enveloppe spirale (47) orientée radialement vers l'extérieur, à l'opposé du sens de rotation du rotor (7).

10. Moteur à combustion interne selon l'une des revendications 1 à 9, caractérisé en ce que le compresseur (5, 51) présente une roue à aubes (5), notamment sous la forme d'un compresseur radial, entraînée avec un sens de rotation (39) opposé au sens de rotation (45) du rotor (7), laquelle accélère le gaz de combustion comprimé dans le sens périphérique et le délivre avec des composantes de direction de flux radiales et tangentielles, en ce que le stator (1) présente un carter annulaire (9) contenant plusieurs chambres de combustion (11), qui entoure la roue à aubes (5) et qui présente de ouvertures d'admission (35) menant dans·les chambres de combustion (11) et des ouvertures de flux sortant (19) menant axialement hors de chambres de combustion (11), et en ce que le rotor (7) porte des tiroirs rotatifs (33, 37) qui commandent les ouvertures d'admission (35) et les ouvertures de flux sortant (19) des chambres de combustion (11).

11. Moteur à combustion interne selon la revendication 10, caractérisé en ce que la roue à aubes (5) est accouplée au rotor (7) par l'intermédiaire d'un engrenage inverseur de sens de rotation, notamment un engrenage planétaire (31).

12. Moteur à combustion interne selon la revendication 10 ou 11, caractérisé en ce que le compresseur (5, 51) comporte de précompresseurs supplémentaires (51).

**Claims**

1. Internal combustion engine, comprising a stator (1) and a rotor (7) rotatably journalled on the stator (1), comprising at least one stationary combustion chamber (11) on the stator (1) having an outlet opening (19) directed towards the rotor (7), comprising a charging and ignition device (5, 23, 51) intermittently charging the combustion chamber (11) with combustion gas and igniting the charge, and comprising at least one working surface (25), capable of moving past the outlet opening (19) and formed by a wall of the expansion chamber (15) of the rotor (7), which working surface deflects the combustion gases flowing out of the combustion chamber (11), characterized in that the compressor (5) charges the compressed combustion gas into the combustion chamber (11) in substantially the opposite direction to the outlet direction (43) of the ignited combustion gases and that the working surface (25) is so constructed that the combustion gases flowing out of the combustion chamber (11) are deflected substantially in the opposite direction thereto.

2. Internal combustion engine according to Claim 1, characterized in that the expansion chamber (15) is so designed that it expands the combustion gases in a single expansion step per ignition to substantially the pressure of the surrounding atmosphere.

3. Internal combustion engine according to Claim 1 or 2, characterized in that the internal cross-section area of the combustion chamber (11) decreases substantially continuously in opposition to the outflow direction (43) of the ignited combustion gases.

4. Internal combustion engine according to Claim 3, characterized in the combustion chamber (11) has substantially parabolic internal wall surfaces.

5. Internal combustion engine according to Claim 4, characterized in that the charging and ignition device (5, 23, 51) possesses an ignition source (23) disposed in the region of the focal point of the parabolic internal wall surface.

6. Internal combustion engine according to one of Claims 1 to 5, characterized in that the working surface (25) of the rotor (7) deflects the ignited combustion gases issuing from the outlet opening (19) substantially through 180°.

7. Internal combustion engine according to one of Claims 1 to 6, characterized in that the combustion chamber (11) is disposed axially laterally of the movement path of the expansion chamber (15), that the outflow direction (43) from the combustion chamber (11) runs at an acute angle to the movement path of the expansion chamber substantially in a plane parallel to the rotational axis of the rotor (7), and that the expansion chamber (15) expands the combustion gases with a flow direction orientated substantially tangentially to the movement path.

8. Internal combustion engine according to Claim 7, characterized in that the compressor (5, 51) charges the combustion chamber at an acute angle to the outflow direction (43) from the side facing towards the rotation axis of the rotor.

9. Internal combustion engine according to Claim 7 or 8, characterized in that the expansion chamber (15) possesses an outlet opening in the circumferential direction of the rotor (7), the radially inner edge region of which is adjoined by a spiral wall surface (47), leading radially outwards opposite to the direction of rotation of the rotor (7).

10. Internal combustion engine according to one of Claims 1 to 9, characterized in that the compressor (5, 51) possesses a propeller (5) driven in a rotational direction (39) opposite to the rotation direction (45) of the rotor (7), especially in the form of a radial compressor, which accelerates the compressed combustion gas in the circumferential direction and discharges with radial and tangential flow direction components, that the stator (1) possesses a casing ring (9) containing several combustion chambers (11), which casing ring surrounds the propeller (5) and possesses inlet openings (35) leading radially into the combustion chambers (11), and outlet openings (19) leading axially out of the combustion chambers (11), and that the rotor (7) carries rotary valves (33, 37) which govern the inlet openings (35) and outlet openings (19).

11. Internal combustion engine according to Claim 10, characterized in that the propeller (5) is coupled to the rotor (7) by a gear reversing the direction of rotation, especially an epicyclic gear (31).

12. Internal combustion engine according to Claim 10 or 11, characterized in that the compressor (5, 51) possesses additional precompressors (51).

FIG.1

FIG.2

1

FIG. 3A

FIG. 3B

FIG. 3C

FIG. 4A

FIG. 4B

FIG. 4C

FIG. 5